# EUROPEAN PATENT SPECIFICATION

(11) **EP 1 669 188 B1**
(45) Date of publication and mention of the grant of the patent: **12.03.2008**
(21) Application number: 05111697.8
(22) Date of filing: 05.12.2005
(51) Int. Cl.: B32B 1/08, B32B 27/30, B32B 25/16, F16L 11/04

(54) **Hose construction containing NBR elastomer composition and fluoroplastic barrier**
Schlauchaufbau enhaltend eine NBR-Zusammensetzung und eine Fluoroplastik-Barriereschicht
Construction de tuyau contenant une composition de NBR et une barrière fluoroplastique

(30) Priority: 10.12.2004 US 9114
(43) Date of publication of application: 14.06.2006
(73) Proprietor: THE GOODYEAR TIRE & RUBBER COMPANY, Akron, OH 44316-0001 (US)
(72) Inventor: Dimascio, Ramon Joseph, Cuyahoga Falls, OH 44233 (US)
(74) Representative: Hellwig, Tillmann Johannes

(56) References cited:
- EP-A- 0 739 712
- US-A1- 2003 026 995

## Description

### Background of the Invention

A major proportion of fuel hose presently employed in automobile applications is a multi-layered structure. The innermost tubular layer of the hose is formed of an elastomeric material intended to keep the fluid in the hose. Located between the innermost layer and the outer elastomeric cover is a barrier layer. EP 0739712 discloses a hose comprising an inner core of acrylonitrile-butadiene rubber and a barrier layer comprising a terpolymer of tetrafluoroethylene, hexafluoropropylene and vinylidene chloride. In other fuel hoses, the barrier layer is the innermost tubular layer (known as a veneer hose), with the elastomeric material being located outside of such barrier layer. Many barrier layers have been used; however, many such compounds used in the barrier do not adhere to the conventional elastomeric material used in the innermost tubular layer. As a result of this problem, those skilled in the art conventionally use a layer between the innermost layer and the barrier layer which is both compatible to the elastomer used in the innermost layer and the barrier layer. In particular, the adhesion between highly impermeable thermoplastic polymer barrier layers and elastomeric innermost layers has been problematic. It is desirable, therefore, to have a hose having excellent adhesion between a highly impermeable thermoplastic polymer barrier layer and an elastomeric layer.

### Summary of the Invention

There is disclosed a hose according to claim 1. Dependent claims cover preferred embodiments of the inventory. In one aspect of the invention, the thermoplastic quadpolymer is derived from (i) 40 to 80 weight percent tetrafluoroethylene, (ii) 10 to 30 weight percent vinylidene fluoride, (iii) 5 to 40 weight percent of a comonomer of the formula CF2=CFRf, and (iv) 0.1 to 15 weight percent of the perfluorovinyl ether of the formula CF₂=CF-(OCF₂CF(R_{f}))ₐOR'_{f},

### Brief Description of the Drawings

Figure 1 is a perspective view of a hose according to the invention.
Figure 2 is a perspective view of a hose according to the invention.

### Detailed Description of the Invention

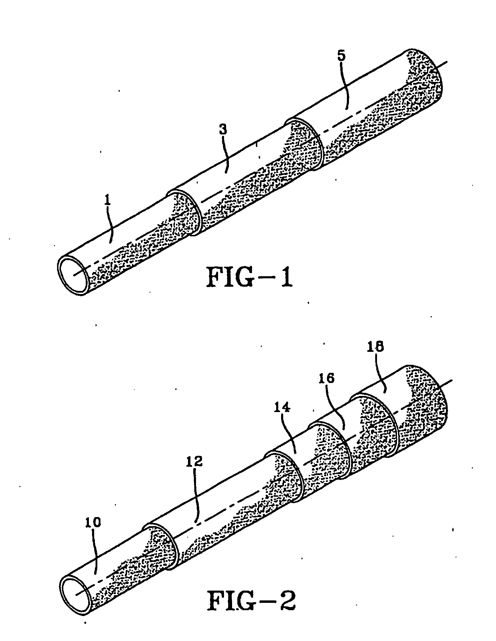

A hose of the present invention comprises a layer of an NBR rubber composition and a layer of thermoplastic quadpolymer derived from tetrafluoroethylene, hexafluoropropylene, vinylidene fluoride, and a perfluorovinyl ether, with the two layers in direct mutual contact. When a hose for example, as shown in Figure 1 is produced, the NBR layer may be an inner core layer 1. The quadpolymer layer may be a barrier layer 3. An embodiment where the quadpolymer layer is an inner core 1 and is a veneer barrier layer, and the layer 3 is of the NBR rubber composition will be described later.

Various acrylonitrile-butadiene rubber (NBR) may be used. For example, the Mooney viscosity (M/L 1+4 @ 100°C) and the acrylonitrile content may vary depending on the use of the hose. Suitable examples of NBR may have a Mooney viscosity as low as 20 to as high as 110. The bound acrylonitrile content of suitable NBR may range from as low as 20 percent by weight to as high as 65 percent by weight. Suitable NBR is available commercially as Nipol from Zeon Chemical such as Nipol 35-5, Nipol DN4555, Nipol DN003 and the like, and KRYNAC from Bayer such as KRYNAC 4560 C, KRYNAC 34E80. In one embodiment, the NBR may comprise a bound acrylonitrile (ACN) of from 30 to 40 weight percent. In another embodiment, the NBR may comprise a bound acrylonitrile (ACN) of at least 41 weight percent. In another embodiment, the NBR may be a high nitrile NBR comprising a bound acrylonitrile (ACN) of at least 45 weight percent.

The NBR rubber composition comprises at least one organophosphonium benzotriazolate. In one embodiment, the organophosphonium benzotriazolate may be selected from the group consisting of quaternary phosphonium benzotriazolates containing alkyl substituted groups having 1 to 20 carbon atoms. The organophosphonium benzotriazolate may be selected from quaternary phosphonium salts having a benzotriazolate anion, including, for example, organophosphonium benzotriazolates, such as tetrabutylphosphonium - benzotriazolates and trioctylethylphosphonium benzotriazolates. In one embodiment, the organophosphonium benzotriazolate is tetra-n-butyl phosphonium benzotriazolate, available as ZEONET PB from Zeon Chemicals. The amount of an organophosponium benzotriazolate which is useful is that amount necessary to give adhesion between the first and second layers of the hose. In one embodiment, the NBR composition comprises from 1 to 10 phr of organophosphonium benzotriazolate. In another embodiment, the NBR composition comprises from 2 to 7 phr of organophosphonium benzotriazolate.

The NBR rubber composition of the second layer of the hose of the invention comprises organophosphonium benzotriazolates and substantially excludes organophosphonium halides such as tetrabutylphosphonium chloride, allyltributylphosphonium chloride, tetrabutylphosphonium bromide, tributyl (methoxypropyl) phosphonium chloride, benzyltriphenylphosphonium chloride, and benzyltrioctylphosphonium chloride. By substantially excludes organophosphonium halides, it is meant that the NBR composition includes less than an amount of organophosphonium halide that would be sufficient to enhance the adhesion of the first layer to the second layer. In one embodiment, the organophosphonium salt comprises less than 1 phr of organophosphonium halides. In another embodiment, the organophosphonium salt comprises less than 0.25 phr of organophosphonium halides.

The NBR rubber composition comprises at least one amidine. In one embodiment the amidines include 1,8-diazabicyclo[5.4.0]undecene-7 (DBU) and 1,5 diazabicyclo[4.3.0]nonene-5 (DBN) and salts thereof. Examples of DBU salts include salts of 1,8-diazabicyclo[5.4.0]undecene-7 with carbonates, long chain fatty acids, carboxylates, aromatic sulfonates or carboxylates, phenol salts, thiolic salts, etc. Typical examples are DBU-carbonate, DBU-stearate, DBU-naphthoate, DBU-P-hydroxy-benzoate, DBU-P-toluene-sulfonate, etc. Also included are unsubstituted or substituted phenol salts of 1,8-diazabicyclo-[5.4.0]undecene-7. Examples of such compounds include the phenol salt of 1,8-diazabicyclo-[5.4.0]undecene-7, the cresol salts of 1,8-diazabicyclo-[5.4.0]undecene-7, resorcinol salts of 1,8-diazabicyclo-[5.4.0]undecene-7 and hydroquinone salts of 1,8-diazabicyclo-[5.4.0]undecene-7. An unsubstituted phenol salt of 1,8-diazabicyclo-[5,4,0]undecene-7 is commercially available from Mitsui & Co (Canada) Ltd under the commercial designation of Accelerator P152. The amount of an amidine which is useful is that amount necessary to give adhesion between the first and second layers of the hose. In one embodiment, the NBR composition comprises from 0.25 to 10 phr of amidine. In another embodiment, the NBR composition comprises from 0.5 to 3 phr of amidine.

In one embodiment, the weight amount of organophosphonium salt benzotriazolate present in the NBR composition is at least equal to the weight amount of amidine present. In another embodiment, the weight amount of organophosphonium benzotriazolate present in the NBR composition is greater than the weight amount of amidine present. In one embodiment, the weight ratio of organophosphonium benzotriazolate to amidine present in the NBR composition ranges from 1 to 10. In another embodiment, the weight ratio of organophosphonium benzotriazolate to amidine present in the NBR composition ranges from 1.1 to 7. In another embodiment, the weight ratio of organophosphonium benzotriazolate to amidine present in the NBR composition ranges from 1.5 to 3.

The NBR rubber composition comprises at least one acid acceptor. Suitable acid acceptors include but are not limited to magnesium oxide, calcium hydroxide, litharge, dibasic lead phosphite, calcium oxide, and zinc oxide, hydrotalcite or tricalcium aluminate hexahydrate, Ca₃Al₂O·6H₂O. Hydrotalcites include but are not limited to materials described by the formula Mg₍₁₋ₓ₎Alₓ(OH)₂(CO₃)_{x/2}•n H₂O; 0.25 < x < 0.33. Synthetic hydrotalcite may include a mixture of various compounds within the given range of x. Synthetic forms of hydrotalcite are available from several sources, including DHT-4A2® and Alcamizer® from Kyowa Chemical Industry Co., Ltd., Sorbacid® 911 from Sud-Chemie AG, Hycite® 713 from Ciba Specialty Chemicals. In one embodiment, the acid acceptor includes calcium hydroxide.

Acid acceptors are present in the rubber composition in a range of from 3 to 20 parts by weight of acid acceptor per 100 parts by weight of elastomer, in other words, from 3 to 20 phr (parts per hundred rubber). In one embodiment, acid acceptors are present in a range of from 5 to 15 phr.

The rubber compositions for use in the hose may be cross-linked by sulfur, UV cure or peroxide cure system. Well-known classes of peroxides that may be used include diacyl peroxides, peroxyesters, dialkyl peroxides and peroxyketals. Specific examples include dicumyl peroxide, n-butyl-4,4-di(t-butylperoxy) valerate, 1,1-di(t-butylperoxy)-3,3,5-trimethylcyclohexane, 1,1-di(t-butylperoxy) cyclohexane, 1,1-di(t-amylperoxy) cyclohexane, ethyl-3,3-di(t-butylperoxy) butyrate, ethyl-3,3-di(t-amylperoxy) butyrate, 2,5-dimethyl-2,5-di(t-butylperoxy) hexane, t-butyl cumyl peroxide, α,α'-bis(t-butylperoxy)diisopropylbenzene, di-t-butyl peroxide, 2,5-dimethyl-2,5-di(t-butylperoxy) hexyne-3, t-butyl perbenzoate, 4-methyl-4-t-butylperoxy-2-pentanone and mixtures thereof. In one embodiment the peroxide is α,α'-bis(t-butylperoxy) diisopropylbenzene. Typical amounts of peroxide ranges from 1 to 12 phr (based on active parts of peroxide). In one embodiment, the amount of peroxide ranges from 1 to 8 phr.

A coagent may be present during the free radical crosslinking reaction. Coagents are monofunctional and polyfunctional unsaturated organic compounds which are used in conjunction with the free radical initiators to achieve improved vulcanization properties. Representative examples include organic acrylates, organic methacrylates, divinyl esters, divinyl benzene, bismaleimides, triallylcyanurates, polyalkyl ethers and esters, metal salts of an alpha-beta unsaturated organic acid and mixtures thereof. In one embodiment, the coagent is triallyl isocyanurate available from Sartomer as SR533. In another embodiment, the coagent is N, N'-m-phenylenedimaleimide, available commercially from Sartomer as SR525 or HVA-2 from DuPont-Dow.

The coagent may be present in the NBR compound in a range of levels. In one embodiment, the coagent is present in an amount ranging from 0.1 to 15 phr. In another embodiment, the coagent is present in an amount ranging from 1 to 10 phr.

The rubber composition for use in the hose may be cured with a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. In one embodiment, the sulfur vulcanizing agent, if used, is elemental sulfur. The amount of sulfur vulcanizing agent will vary depending on the remaining ingredients in the coating and the particular type of sulfur vulcanizing agent that is used. In one embodiment, the amount of sulfur vulcanizing agent ranges from 0.1 to 8 phr. In another embodiment the amount of sulfur vulcanizing agent ranges from 1.0 to 3 phr.

Accelerators may be used to control the time and/or temperature required for vulcanization of the rubber composition. As known to those skilled in the art, a single accelerator may be used which is present in amounts ranging from 0.2 to 3.0 phr. In the alternative, combinations of two or more accelerators may be used which consist of a primary accelerator which is generally used in a larger amount (0.3 to 3.0 phr), and a secondary accelerator which is generally used in smaller amounts (0.05 to 1.50 phr) in order to activate and improve the properties of the rubber stock. Delayed action accelerators also are known to be used which are not affected by normal processing temperatures and produce satisfactory cures at ordinary vulcanization temperatures. Suitable types of accelerators include amines, disulfides, guanidines, thioureas, thiazoles, thiurams, sulfenamides, dithiocarbamates and the xanthates. Examples of specific compounds which are suitable include zinc diethyl-dithiocarbamate, 4,4'-dithiodimorpholine, N,N-di-methyl-S-tert-butylsulfenyldithiocarbamate, tetramethylthiuram disulfide, 2,2'-dibenzothiazyl disulfide, butyraldehydeaniline mercaptobenzothiazole, N-oxydiethylene-2-benzothiazolesulfenamide. In one embodiment, the accelerator is a sulfenamide.

A class of compounding materials known as scorch retarders are commonly used. Phthalic anhydride, salicylic acid, sodium acetate and N-cyclohexyl thiophthalimide are known retarders. Retarders are generally used in an amount ranging from 0.1 to 0.5 phr.

Conventional carbon blacks may also be present in the rubber composition. In one embodiment, carbon black is used in an amount ranging from 5 to 250 phr. In another embodiment, carbon black is used in an amount ranging from 20 to 100 phr. Representative examples of carbon blacks which may be used include but are not limited those known by their ASTM designations N110, N121, N242, N293, N299, N315, N326, N330, N332, N339, N343, N347, N351, N358, N375, N550, N582, N630, N624, N650, N660, N683, N754, N762, N907, N908, N990, N991 and mixtures thereof.

It is readily understood by those having skill in the art that the rubber composition would be compounded by methods generally known in the rubber compounding art, such as mixing the various constituent rubbers with various commonly used additive materials such as, for example, curing aids and processing additives, such as oils, resins including tackifying resins and plasticizers, fillers, pigments, fatty acid, waxes, antioxidants and antiozonants. The additives mentioned above are selected and commonly used in conventional amounts.

Typical amounts of tackifier resins, if used, comprise 0.5 to 10 phr, usually 1 to 5 phr. Typical amounts of processing aids comprise 1 to 50 phr. Such processing aids can include, for example, polyethylene glycol, naphthenic and/or paraffinic processing oils. Typical amounts of antioxidants comprise 1 to 5 phr. A representative antioxidant is trimethyl-dihydroquinoline. Typical amounts of fatty acids, if used, which can include stearic acid comprise 0.5 to 3 phr. Typical amounts of waxes comprise 1 to 5 phr. Often microcrystalline and carnauba waxes are used. Typical amounts of plasticizer, if used, comprise from 1 to 100 phr. Representative examples of such plasticizers include dioctyl sebacate, chlorinated paraffins, and the like.

Various non-carbon black fillers and/or reinforcing agents may be added to increase the strength and integrity of the rubber composition for making the hose of the present invention. An example of a reinforcing agent is silica. Silica may be used in the rubber composition in amounts from 0 to 80 parts. In one embodiment, silica is used in an amount of 10 to 20 parts, by weight based on 100 parts of rubber.

The mixing of the rubber composition can be accomplished by methods known to those having skill in the rubber mixing art. For example, the ingredients may be mixed in one stage but are typically mixed in at least two stages, namely at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s).

In one embodiment, curing of the rubber composition is carried out at temperatures ranging from 150°C to 190°C, and a pressure of at least 0.5171 MPa (75 psig). In another embodiment, the curing is conducted at temperatures ranging from about 160°C to 180°C, and a pressure of at least 0.5171 MPa (75 psig). Post cure may include a gradual reduction of pressure and temperature. Curing may be done using any of the methods as are known in the art, such as with a steam autoclave, heated press, or the like.

Referring to Figure 1, the inner core layer 1 may be of the above-described NBR rubber composition with the barrier layer 3 of thermoplastic quadpolymer in direct mutual contact with the second layer.

In accordance with another embodiment, a barrier or veneer layer 1 of quadpolymer may be the inner core with an NBR rubber layer 3 in direct mutual contact with the first layer.

The NBR rubber layer may be formed by known extrusion methods. The thickness of this layer, whether the inner core 1 or layer 3, is important as excessively thin wall thicknesses or excessively thick wall thicknesses present flexibility or kinking problems or coupling compatibility problems of the final hose composite. It is believed that the inside diameter of the inner core 1, whether made from the rubber or barrier layer, should range from 3 mm to 100 mm. In one embodiment, the inside diameter of the inner core will range from 4 mm to 75 mm. When the inner core is made from the rubber composition, in one embodiment the wall thickness of the inner core 1 should range from 0.1 mm to 8.0 mm, and in another embodiment the range is from 0.5 mm to 4.0 mm. When the inner core is made from the barrier layer compound, the wall thicknesses of the inner core 1 should range from 0.02 to 0.76 mm.

One advantage of the present invention is that the layer of NBR rubber composition is in direct mutual contact with and thus may be directly adhered to the quadpolymer barrier layer used in the present invention. Accordingly, the superior permeation resistance of the quadpolymer barrier layer may be utilized without sacrifice of adhesion between the rubber composition layer and the barrier layer.

The barrier layer 1 or 3 used in the present invention is derived from a fluorothermoplastic as will be described more fully later herein. The thickness of this barrier layer 1 or 3 is important, as excessively thin wall thicknesses or excessively thick wall thicknesses present flexibility or kinking problems or desired barrier properties. Generally speaking, the thickness of the barrier layer 1 or 3 will range from 0.1 mm to 1 mm. Alternatively, the thickness of the barrier layer 1 or 3 will range from 0.15 mm to 0.5 mm.

The barrier layer, which may be a barrier layer 3 or veneer barrier layer 1, includes a quadpolymer derived from tetrafluoroethylene, hexafluoropropylene, vinylidene fluoride, and a perfluorovinyl ether. In one embodiment, the quadpolymers are as disclosed in US-B-6,489,420. As disclosed therein, suitable thermoplastic quadpolymers are derived from (i) tetrafluoroethylene, (ii) vinylidene fluoride, (iii) at least one ethylenically unsaturated monomer of the formula CF₂=CFR_{f} where R_{f} is a perfluoroalkyl or a perfluoroalkoxy of 1 to 8 carbon atoms, and (iv) a perfluorovinyl ether of the formula CF₂=CF-(OCF₂ CF(R_{f}))ₐ OR'_{f} where R_{f} is as described in (iii), R'_{f} is a perfluoroaliphatic, preferably a perfluoroalkyl or a perfluoroalkoxy, of 1 to 8, preferably 1 to 3, carbon atoms, and a has a value of 0 to 3. In one embodiment, suitable thermoplastic quadpolymers comprise (i) 40 to 80 weight percent (alternatively 45 to 76 weight percent) tetrafluoroethylene, (ii) 10 to 30 weight percent (alternatively 12 to 25 weight percent) vinylidene fluoride, (iii) 5 to 40 weight percent (alternatively from 10 to 30 weight percent) of a comonomer of the formula CF₂=CFR_{f}, and (iv) 0.1 to 15 weight percent (alternatively 1 to 10 weight percent) of the perfluorovinyl ether of the formula CF₂=CF-(OCF₂ CF(R_{f}))ₐ OR'_{f}.

In an alternative embodiment, the thermoplastic quadpolymer contains interpolymerized units derived from TFE, VDF, HFP and the perfluorovinyl ether wherein the value of "a" is 0, 1 or 2.

In an alternative embodiment, the thermoplastic quadpolymer contains interpolymerized units derived from TFE, VDF, HFP and the perfluorovinyl ether is of the formulas PPVE1 or PPVE2:

CF₂=CFOCF₂CF₂CF₃ PPVE1

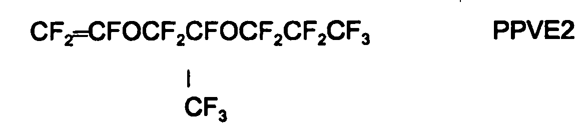

In one embodiment, the thermoplastic quadpolymer which may be used to form the barrier layer of the hose of the present invention are commercially available from the Dyneon Company under the commercial designation THV X 815G.

The hose may include an outer cover 5. This outer cover 5 may be made from an elastomeric material. When an elastomeric cover is desired, the cover 5 may be extruded over the underlying layer 3, or, as discussed below, various other optional layers. The elastomers which may be used to form the cover 5 for a hose of the present invention include those known to those skilled in the art such as chlorosulfonated polyethylene, chlorinated polyethylene, acrylonitrile-butadiene rubber/PVC blends, epichlorohydrin, ethylene propylene diene terpolymer (EPDM), polychloroprene, EVA, ethylene acrylic elastomer AEM, and ethylene vinyl acetate copolymer (EVM). The thickness of the elastomeric cover 5 is obviously depends upon the desired properties of the hose and the elastomer that is used. In one embodiment, the thickness of the elastomeric cover 5 will range from 0.1 mm to 10 mm. In another embodiment the thickness of the cover will a range from 0.5 mm to being 2.5 mm.

Whereas the basic layers have been discussed above as essential to the present invention, the hose of the present invention may have optional features. For example, when a hose as shown in Figure 2 is produced having the inner NBR core 10, and quadpolymer barrier layer 12, disposed on the outside of the barrier layer 12 may be a layer 14 of another polymer. Such polymer may be of the same composition as the inner core 10. In another embodiment, the polymer which is used in layer 14, which interfaces the barrier layer 12, may of a different polymer. The thickness of layer 14 which interfaces the barrier layer 12 may range depending upon the polymer selected. In one embodiment, the thickness layer 14 will range of from about 0.25 mm to about 1.5 mm. In another embodiment, the thickness of layer 14 will range from about 0.50 mm to about 1.0 mm.

Another optional feature of the present invention is reinforcement 16 which may be added on top of layer 14 which interfaces with the barrier layer 12. Such reinforcement 16 is known to those skilled in the art and may consist of spiraled, knitted or braided yarn. Such reinforcements may be derived from polyester, nylon, rayon or aramid cords. The reinforcement 16 may be spirally wound about the underlying layer under sufficient tension to improve the strength of the hose structure. The reinforcement layer 16 may be spirally wrapped at angles such that the flexing of the hose will not result in collapse or kinking. An angle such as from 0 to 89.9° with respect to the centerline of the hose may be used. In one embodiment, a neutral angle of 54° 73' or below may be used for the spiral wraps.

In one embodiment, the inner layer 10 is made from an NBR composition comprising a NBR comprising greater than 41 percent by weight of bound acrylonitrile (ACN). The barrier layer 12 overlaying the inner layer comprises the above described quadpolymer. A friction layer 14 overlaying the barrier layer 12 is made from an NBR composition comprising an NBR comprising from 30 to 40 percent by weight of bound acrylonitrile. The hose may further optionally Include reinforcement layer 16 and cover layer 18.

In accordance with one embodiment, the inner core 10 functions as a barrier layer comprised of the above-described quadpolymer, the next layer 12 is made of an NBR composition, the next layer 14 is omitted, with reinforcement 16 being directly against the rubber layer 12 followed by an outer cover 18.

As mentioned above, the elastomeric cover 18 is the outside layer.

The NBR layer may be formed by extrusion methods known to those skilled in the art. The thickness of this layer whether the innermost layer 1 or 10 or next layer 3 or 12 is important as excessively thin wall thicknesses or excessively thick wall thicknesses present flexibility or kinking problems or coupling compatibility problems of the final hose composite. In one embodiment the inside diameter of the innermost layer 1 or 10 whether made from the NBR or quadpolymer should range from 3 mm to 100 mm. In one embodiment, the inside diameter of the innermost layer will range from 4 mm to 75 mm. When the innermost layer is made from the NBR composition, the wall thicknesses of the innermost layer should range from 0.1 mm to 8 mm. Alternatively, the wall thickness of the innermost layer will range from 0.5 mm to 4 mm. When the innermost layer is made from the barrier layer compound, the wall thicknesses of the innermost layer should range from 0.1 to 1 mm.

The following example is provided to illustrate the instant invention.

### EXAMPLE 1

NBR rubber compositions containing an NBR with 50 percent bound acrylonitrile were prepared and evaluated for adhesion to a thermoplastic fluoropolymer suitable for use as a hose barrier layer. Recipes used in the rubber compositions are shown in Tables 1 and 3, with all amounts given in parts by weight. Samples 1-4 were controls, and Samples 5-9 represent the current invention. Samples of each rubber composition were fabricated with a THV X 815G thermoplastic fluoropolymer layer and cured at 171.1°C (340ºF) with a bladder pressure of 0.6895 MPa (100 psig) for 25 minutes on a heated press followed by a gradual cool down over 10 minutes to give samples suitable for adhesion testing. The adhesion samples were then tested for adhesion of the NBR composition to the THV X 815G using an Instron tester per ASTM D 413-98. Results of adhesion tests are given in Tables 2 and 4.

**Table 1**

| Sample No.⁹ | 1 | 2 | 3 | 4 | 5 |
|---|---|---|---|---|---|
| NBR, 50% ACN¹ | 100 | 100 | 100 | 100 | 100 |
| Acid acceptor² | 12 | 12 | 12 | 12 | 12 |
| Amidine³ | 0 | 0 | 0 | 2 | 2 |
| Organophosphonium chloride⁴ | 0 | 5 | 0 | 0 | 5 |
| Organophosphonium benzotriazolate⁵ | 0 | 0 | 5 | 0 | 0 |
| Peroxide⁶ | 4 | 6 | 6 | 6 | 6 |
| Coagent⁷ | 1 | 1 | 1 | 1 | 1 |
| Coxgent⁸ | 1 | 1 | 1 | 1 | 0 |

| | | | | | |
|---|---|---|---|---|---|
| ¹Nipol DN003, acrylonitrile-butadiene rubber with 50% by weight bound acrylonitrile ² Ca(OH)₂ ³ DBU, 1 ,8-diazabicyclo[5.4.0]undecene-7 ⁴ Fox-5166, allyltributyl phosphonium chloride ⁵ Zeonet PB, tetra-n-butyl phosphonium benzotriazolate ⁶Varox 802 40KE, bis(tert-butylperoxy) diisopropylbenzene, 40% on KE clay ⁷HVA-2, N,N'-m-phenylenedimaleimide ⁸SR533, triallyl isocyanurate ⁹ All samples included the following (phr): Zeon B-210 Resin, 18,5; N-550 Black, 60.5; dibutyl phthalate, 9; TOTM, 5; Plasthall 203 DBEA, 7; Mistron Vapor, 5; Degussa Si69, 0.5; Wingstay 100, 1; TMQ, 2; Nipol 1312 on HiSil, 7. | | | | | |

**Table 2**

| **Adhesion to THV X 815G Fluoroplastic** | | | | | |
|---|---|---|---|---|---|
| Sample No. | 1 | 2 | 3 | 4 | 5 |
| Amidine | 0 | 0 | 0 | 2 | 2 |
| Organophosphonium chloride | 0 | 5 | 0 | 0 | 5 |
| Organophosphonium benzotriazolate | 0 | 0 | 5 | 0 | 0 |
| Avg Adhesion, Ib_{f} | 1 | 1 | 18.2 | 1 | 5 |
| Rubber tear at interface, % | 0 | 0 | 100 | 0 | 0 |

**Table 3**

| Sample No.⁸ | 3 | 4 | 6 | 7 | 8 | 9 |
|---|---|---|---|---|---|---|
| NBR, 50% ACN¹ | 100 | 100 | 100 | 100 | 100 | 100 |
| Acid acceptor² | 12 | 12 | 12 | 12 | 12 | 12 |
| Amidine³ | 0 | 2 | 2 | 2 | 2 | 2 |
| Organophosphonium benzotriazolate⁴ | 5 | 0 | 2 | 3 | 4 | 5 |
| Peroxide⁵ | 6 | 6 | 6 | 6 | 6 | 6 |
| Coagent⁶ | 1 | 1 | 1 | 1 | 1 | 1 |
| Coagent⁷ | 0 | 1 | 1 | 0 | 0 | 0 |

| | | | | | | |
|---|---|---|---|---|---|---|
| ¹Nipol DN003, acrylonitrile-butadiene rubber with 50% by weight bound acrylonitrile ²Ca(OH)₂ ³ DBU, 1,8-diazabicyclo[5.4.0]undecene-7 ⁴Zeonet PB, tetra-n-butyl phosphonium benzotriazolate ⁵ Varox 802 40KE, bis(tert-butylperoxy) diisopropylbenzene, 40% on KE clay ⁶HVA-2, N,N'-m-phenylenedimaleimide ⁷SR533, triallyl isocyanurate ⁸ All samples included the following (phr): Zeon B-210 Resin, 18.5; N-550 Black, 60.5; dibutyl phthalate, 9; TOTM, 5; Plasthall 203 DBEA, 7; Mistron Vapor, 5; Degussa Si69, 0.5; Wingstay 100, 1; TMQ, 2; Nipol 1312 on HiSil, 7. | | | | | | |

**Table 4**

| **Adhesion to THV X 815G Fluoroplastic** | | | | | | |
|---|---|---|---|---|---|---|
| Sample No. | 3 | 4 | 6 | 7 | 8 | 9 |
| Amidine | 0 | 2 | 2 | 2 | 2 | 2 |
| Organophosphonium benzotriazolate | 5 | 0 | 2 | 3 | 4 | 5 |
| Avg Adhesion, Ib_{f} | 18.2 | 1 | 7.4 | 24.3 | 26.3 | 27.4 |
| Rubber tear at interface, % | 100 | 0 | 10 | 100 | 100 | 100 |

Surprisingly, use of the organophosphonium chloride FX-5166 did not result in acceptable adhesion of the NBR composition to the fluoroplastic quadpolymer THV X 815G. The combination of the amidine and organophosphonium benzotriazolate (samples 6-9) resulted in excellent adhesion between the high nitrile NBR and the fluoroplastic quadpolymer THV X 815G.

### EXAMPLE 2

NBR rubber compositions containing an NBR with 45 percent bound acrylonitrile were prepared and evaluated for adhesion to a thermoplastic fluoropolymer suitable for use as a hose barrier layer. Recipes used in the rubber compositions are shown in Table 5, with all amounts given in parts by weight. Samples 10, 12 and 13 were controls, and Sample 11 represents an embodiment of the current invention. Samples of each rubber composition were fabricated with a THV X 815G thermoplastic fluoropolymer layer and cured at 171.1 °C (340°F) with a bladder pressure of 0.6895 MPa (100 psig) for 25 minutes on a heated press followed by a gradual cool down over 10 minutes to give samples suitable for adhesion testing. The adhesion samples were then tested for adhesion of the NBR composition to the THV X 815G using an Instron tester per ASTM D 413-98. Results of adhesion tests are given in Table 6.

**Table 5**

| Sample No.⁸ | 10 | 11 | 12 | 13 |
|---|---|---|---|---|
| NBR, 45% ACN¹ | 100 | 100 | 100 | 100 |
| Acid acceptor² | 10 | 10 | 10 | 10 |
| Amidine³ | 6 | 6 | 0 | 0 |
| Organophosphonium benzotriazolate⁴ | 0 | 2 | 6 | 8 |
| Peroxide⁵ | 6 | 6 | 6 | 6 |
| Coagent⁶ | 1 | 1 | 1 | 1 |
| Coagent⁷ | 0 | 0 | 0 | 0 |

| | | | | |
|---|---|---|---|---|
| ¹Nipol DN4555, acrylonitrile-butadiene rubber with 45% by weight bound acrylonitrile ² Ca(OH)₂ ³ DBU, 1,8-diazabicyclo[5.4.0]undecene-7 ⁴ Zeonet PB, tetra-n-butyl phosphonium benzotriazolate ⁵ Varox 802 40KE, bis(tert-butylperoxy) diisopropylbenzene, 40% on KE clay ⁶HVA-2, N,N'-m-phenylenedimaleimide ⁷ SR533, triallyl isocyanurate ⁸ All samples included the following (phr): Zeon B-210 Resin, 18.75; N-550 Black, 60; Vulcan XC-72, 6; dibutyl phthalate, 9; TOTM, 5; Plasthall 209, 7; Mistron Vapor, 5; Degussa Si69, 0.5; Wingstay 100, 1; TMQ, 2; Nipol 1312 on HISil, 7. | | | | |

**Table 6**

| **Adhesion to THV X 815G Fluoroplastic** | | | | |
|---|---|---|---|---|
| Sample No. | 10 | 11 | 12 | 13 |
| Amidine | 6 | 6 | 0 | 0 |
| Organophosphonium benzotriazolate | 0 | 2 | 6 | 8 |
| Avg Adhesion, Ib_{f} | 2.4 | 13.8 | 26.8 | 22.8 |
| Rubber tear at interface, % | 0 | 50 | 100 | 100 |

Surprisingly, use of the amidine alone (sample 10) did not result in acceptable adhesion of the medium nitrile NBR to the fluoroplastic quadpolymer THV X 815G. Use of the amidine with a lesser amount of the organophosphonium (sample 11) gave some adhesion. Further, use of higher concentrations of the organophosphonium benzotriazolate alone apparently does not further improve adhesion, and may lead to reduced adhesion (samples 12 and 13).

### EXAMPLE 3

NBR rubber compositions containing an NBR with 35 percent bound acrylonitrile were prepared and evaluated for adhesion to a thermoplastic fluoropolymer suitable for use as a hose barrier layer. Recipes used in the rubber compositions are shown in Table 7, with all amounts given in parts by weight. Samples 14-16 were controls, and Sample 17 represents the current invention. Samples of each rubber composition were fabricated with a THV X 815G thermoplastic fluoropolymer layer and cured at 171.1°C (340°F) with a bladder pressure of 0.6895 MPa (100 psig) for 25 minutes on a heated press followed by a gradual cool down over 10 minutes to give samples suitable for adhesion testing. The adhesion samples were then tested for adhesion of the NBR composition to the THV X 815G using an Instron tester per ASTM D 413-98. Results of adhesion tests are given in Table 8.

**Table 7**

| Sample No.⁷ | 14 | 15 | 16 | 17 |
|---|---|---|---|---|
| NBR, 35% ACN¹ | 100 | 100 | 100 | 100 |
| Acid acceptor² | 8 | 8 | 8 | 8 |
| Amidine³ | 0 | 2 | 0 | 2 |
| Organophosphonium benzotriazolate⁴ | 0 | 0 | 3 | 3 |
| Peroxide⁵ | 1.4 | 1.4 | 1.4 | 1.4 |
| Coagent⁶ | 1 | 1 | 1 | 1 |

| | | | | |
|---|---|---|---|---|
| ¹ Nipol 35-5, acrylonitrile-butadiene rubber with 35% by weight bound acrylonitrile ² Ca(OH)₂ ³ DBU, 1,8-diazabicyclo[5.4.0]undecene-7 ⁴ Zeonet PB, tetra-n-butyl phosphonium benzotriazolate ⁵ Varox 802 40KE, bis(tert-butylperoxy) diisopropylbenzene, 40% on KE clay ⁶HVA-2, N,N'-m-phenylenedimaleimide ⁷All samples included the following (phr): N-550 Black, 64.8; dibutyl phthalate, 9; TOTM, 5.2; Plasthall 209, 6.8; Mistron Vapor, 5; Degussa Si69/black, 1; Oxoflex DPA, 2.1 | | | | |

**Table 8**

| **Adhesion to THV X 815G Fluoroplastic** | | | | |
|---|---|---|---|---|
| Sample No. | 14 | 15 | 16 | 17 |
| Amidine | 0 | 2 | 0 | 2 |
| Organophosphonium benzotriazolate | 0 | 0 | 3 | 3 |
| Avg Adhesion, lb_{f} | 1 | 9.5 | 1 | 30.4 |
| Rubber tear at interface, % | 0 | 0 | 0 | 100 |

Surprisingly, the combination of the amidine and the organophosphonium benzotriazolate resulted in excellent adhesion of the NBR composition to the THV X 815G, while the either amidine or organophosphonium benzotriazolate alone gave poor adhesion.

## Claims

1. A hose comprising first and second layers in direct mutual contact; the first layer (12) comprising a thermoplastic quadpolymer derived from tetrafluoroethylene, hexafluoropropylene, vinylidene fluoride, and a perfluorovinyl ether and; the second layer (10) comprising:
100 parts by weight of an acrylonitrile-butadiene rubber (NBR), said acrylonitrile rubber comprising from 20 to 65 percent by weight of bound acrylonitrile;
from 3 to 20 parts by weight, per 100 parts by weight of the NBR, of at least one acid acceptor;
from 1 to 10 parts by weight, per 100 parts by weight of the NBR, of at least one organophosphonium benzotriazolate; and
from 0.25 to 10 parts by weight, per 100 parts by weight of the NBR, of at least one amidine.

2. The hose of claim 1, wherein the acrylonitrile-butadiene rubber comprises at least 41 weight percent, preferably at least 45 weight percent, bound acrylonitrile.

3. The hose of claim 1 or 2, wherein the hose comprises a tert-n-butyl phosphonium benzotriazolate.

4. The hose of at least one of the previous claims, wherein the weight ratio of the at least one organophosphonium benzotriazolate to the at least one amidine is at least one or ranges from 1.1 to 7.

5. The hose of claim 4, wherein the weight ratio of the at least one organophosphonium benzotriazolate to the at least one amidine ranges from 1.5 to 3.

6. The hose of at least one of the previous claims, wherein the at least one amidine is selected from 1,8-diazabicyclo[5.4.0]undecene-7 and 1,5 diazabicyclo[4.3.0]nonene-5 and salts thereof.

7. The hose of at least one of the previous claims, wherein said at least one acid acceptor is calcium hydroxide.

8. The hose of claim 1, wherein said at least one organophosphonium benzotriazolate comprises tert-n-butyl phosphonium benzotriazolate, said at least one amidine comprises 1,8-diazabicyclo[5.4.0]undecene-7, and the weight ratio of the at least one organophosphonium benzotriazolate to the at least one amidine ranges from 1.1 to 7, preferably from 1.5 to 3.

9. The hose of at least one of the previous claims, where said thermoplastic quadpolymer is derived from (i) tetrafluoroethylene, (ii) vinylidene fluoride, (iii) at least one ethylenically unsaturate monomer of the formula CF₂=CFR_{f} where R_{f} is a perfluoroalkyl or a perfluoroalkoxy of 1 to 8 carbon atoms, (iv) a perfluorovinyl ether of the formula CF₂=CF-(OCF₂ CF(R_{f}))ₐ OR'_{f}, where R_{f} is as described in (iii), R'_{f} is a perfluoroaliphatic, a perfluoroalkyl or a perfluoroalkoxy, of 1 to 8 carbon atoms, and has a value of 0 to 3, or (v) from tetrafluorethylene, hexafluoropropylene, vinylidene fluoride and a perfluorovinyl ether of formula PPVE1 or PPVE2:
CF₂=CFOCF₂CF₂CF₃ PPVE1

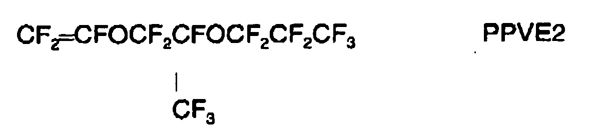

10. The hose of at least one of the previous claims comprising an innermost layer (10) comprising 100 parts by weight of an acrylonitrile-butadiene rubber (NBR), said acrylonitrile rubber comprising at least 41 percent by weight of bound acrylonitrile;
from 3 to 20 parts by weight, per 100 parts by weight of the NBR, of at least one acid acceptor;
from 1 to 10 parts by weight, per 100 parts by weight of the NBR, of at least one organophosphonium benzotriazolate; and
from 0.25 to 10 parts by weight, per 100 parts by weight of the NBR, of at least one amidine;
a barrier layer (12) overlaying and in direct mutual contact with the innermost layer (10), the barrier layer (12) comprising a thermoplastic quadpolymer derived from tetrafluoroethylene, hexafluoropropylene, vinylidene fluoride, and a perfluorovinyl ether; and
a friction layer (14) overlaying and in direct mutual contact with the barrier layer (12), the friction layer (14) comprising 100 parts by weight of an acrylonitrile-butadiene rubber (NBR), said acrylonitrile rubber comprising from 30 to 40 percent, preferably 45 percent, by weight of bound acrylonitrile;
from 3 to 20 parts by weight, per 100 parts by weight of the NBR, of at least one acid acceptor;
from 1 to 10 parts by weight, per 100 parts by weight of the NBR, of at least one organophosphonium salt; and
from 0.25 to 10 parts by weight, per 100 parts by weight of the NBR, of at least one amidine.

## Patentansprüche

1. Schlauch aus einer ersten und einer zweiten Schicht in direktem gegenseitigem Kontakt, wobei die erste Schicht (12) ein thermoplastisches, von Tetrafluorethylen, Hexafluorpropylen, Vinylidenfluorid und einem Perfluorvinylether abgeleitetes Quadpolymer umfasst und die zweite Schicht (10) Folgendes umfasst:
100 Gewichtsteile Acrylnitril/Butadien-Kautschuk (NBR), wobei der Acrylnitrilkautschuk 20 bis 65 Gew.-% gebundenes Acrylnitril umfasst;
3 bis 20 Gewichtsteile mindestens eines Säureakzeptors pro 100 Gewichtsteile NBR;
1 bis 10 Gewichtsteile mindestens eines Organophosphoniumbenzotriazolats pro 100 Gewichtsteile NBR; und
0,25 bis 10 Gewichtsteile mindestens eines Amidins pro 100 Gewichtsteile NBR.

2. Schlauch nach Anspruch 1, bei dem der Acrylnitril/Butadien-Kautschuk mindestens 41 Gew.-%, vorzugsweise mindestens 45 Gew.-% gebundenes Acrylnitril umfasst.

3. Schlauch nach Anspruch 1 oder 2, wobei der Schlauch ein tert-n-Butylphosphoniumbenzotriazolat umfasst.

4. Schlauch nach mindestens einem der vorangegangenen Ansprüche, bei dem das Gewichtsverhältnis des mindestens einen Organophosphoniumbenzotriazolats zu dem mindestens einen Amidin mindestens 1 beträgt oder zwischen 1,1 und 7 liegt.

5. Schlauch nach Anspruch 4, bei dem das Gewichtsverhältnis des mindestens einen Organophosphoniumbenzotriazolats zu dem mindestens einen Amidin zwischen 1,5 und 3 liegt.

6. Schlauch nach mindestens einem der vorangegangenen Ansprüche, bei dem das mindestens eine Amidin aus 1,8-Diazabicyclo[5.4.0]undecen-7, 1,5-Diazabicyclo[4.3.0]nonen-5 und Salzen davon ausgewählt ist.

7. Schlauch nach mindestens einem der vorangegangenen Ansprüche, bei dem der mindestens eine Säureakzeptor Calciumhyxdroxid ist.

8. Schlauch nach Anspruch 1, bei dem das mindestens eine Organophosphoniumbenzotriazolat tert-n-Butylphosphoniumbenzotriazo-lat umfasst, das mindestens eine Amidin 1,8-Diazabicyclo[5.4.0]undecen-7 umfasst und das Gewichtsverhältnis des mindestens einen Organophosphoniumbenzotriazolats zu dem mindestens einen Amidin zwischen 1,1 und 7, vorzugweise zwischen 1,5 und 3 liegt.

9. Schlauch nach mindestens einem der vorangegangenen Ansprüche, bei dem das thermoplastische Quadpolymer von (i) Tetrafluorethylen, (ii) Vinylidenfluorid, (iii) mindestens einem ethylenisch ungesättigten Monomer der Formel CF₂=CFR_{f}, worin R_{f} ein Perfluoralkyl oder ein Perfluoralkoxy mit 1 bis 8 Kohlenstoffatomen ist, (iv) einem Perfluorvinylether der Formel CF₂=CF-(OCF₂CF(R_{f}))ₐOR'_{f}, worin R_{f} der Beschreibung von (iii) entspricht, R'_{f} eine perfluoraliphatische Substanz, ein Perfluoralkyl oder ein Perfluoralkoxy mit 1 bis 8 Kohlenstoffatomen ist und einen Wert von 0 bis 3 besitzt, oder (v) Tetrafluorethylen, Hexafluorpropylen, Vinylidenfluorid und einem Perfluorvinylether der Formel PPVE1 oder PPVE2 abgeleitet ist:
CF₂=CFOCF₂CF₂CF₃ PPVE1

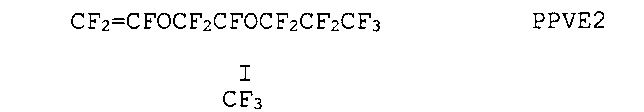

10. Schlauch nach mindestens einem der vorangegangenen Ansprüche mit einer innersten Schicht (10), die Folgendes umfasst:
100 Gewichtsteile Acrylnitril/Butadien-Kautschuk (NBR), wobei der Acrylnitrilkautschuk mindestens 41 Gew.-% gebundenes Acrylnitril umfasst;
3 bis 20 Gewichtsteile mindestens eines Säureakzeptors pro 100 Gewichtsteile NBR;
1 bis 10 Gewichtsteile mindestens eines Organophosphoniumbenzo-triazolats pro 100 Gewichtsteile NBR; und
0,25 bis 10 Gewichtsteile mindestens eines Amidins pro 100 Gewichtsteile NBR;
einer über der innersten Schicht (10) liegenden und in direktem gegenseitigem Kontakt mir ihr stehenden Sperrschicht (12), die ein thermoplastisches, von Tetrafluorethylen, Hexafluorpropylen, Vinylidenfluorid und einem Perfluorvinylether abgeleitetes Quadpolymer umfasst; und
einer über der Sperrschicht (12) liegenden und in direktem gegenseitigem Kontakt mir ihr stehenden Reibungsschicht (14), die Folgendes umfasst:
100 Gewichtsteile Acrylnitril/Butadien-Kautschuk (NBR), wobei der Acrylnitrilkautschuk 30 bis 40 Gew.-%, vorzugsweise 45 Gew.-% gebundenes Acrylnitril umfasst;
3 bis 20 Gewichtsteile mindestens eines Säureakzeptors pro 100 Gewichtsteile NBR;
1 bis 10 Gewichtsteile mindestens eines Organophosphoniumsalzes pro 100 Gewichtsteile NBR; und
0,25 bis 10 Gewichtsteile mindestens eines Amidins pro 100 Gewichtsteile NBR.

## Revendications

1. Tuyau comprenant une première et une deuxième couches en vis-à-vis direct ; la première couche (12) comprenant un polymère quaternaire thermoplastique dérivé de tétrafluoroéthylène, d'héxafluoropropylène, de fluorure de vinylidène et d'éther de perfluorovinyle et ; la deuxième couche (10) comprenant :
100 parties en poids d'un caoutchouc
acrylonitrile-butadiène (NBR), ledit caoutchouc acrylonitrile comprenant de 20 à 65 pourcent en poids d'acrylonitrile lié ;
de 3 à 20 parties en poids, pour 100 parties en poids du NBR, d'au moins un accepteur d'acide ;
de 1 à 10 parties en poids, pour 100 parties en poids du NBR, d'au moins un benzotriazolate d'organophosphonium ; et
de 0,25 à 10 parties en poids, pour 100 parties en poids du NBR, d'au moins une amidine.

2. Tuyau selon la revendication 1, **caractérisé en ce que** le caoutchouc acrylonitrile-butadiène comprend au moins 41 pourcent en poids, de manière préférée au moins 45 pourcent en poids d'acrylonitrile lié.

3. Tuyau selon la revendication 1 ou 2, **caractérisé en ce que** le tuyau comprend un benzotriazolate de tert-n-butyl phosphonium.

4. Tuyau selon au moins l'une des revendications précédentes, **caractérisé en ce que** le rapport pondéral de l'au moins un benzotriazolate d'organophosphonium à l'au moins une amidine est au moins l'un, ou est dans la plage, de 1,1 à 7.

5. Tuyau selon la revendication 4, **caractérisé en ce que** le rapport pondéral de l'au moins un benzotriazolate de phosphonium à l'au moins une amidine est dans la plage de 1,5 à 3.

6. Tuyau selon au moins l'une des revendications précédentes, **caractérisé en ce que** l'au moins une amidine est choisie à partir de 1,8-diazabicyclo[5.4.0]undécène-7 et de 1,5-diazabicyclo[4.3.0]nonène-5 et leurs sels.

7. Tuyau selon au moins l'une des revendications précédentes, **caractérisé en ce que** l'au moins un accepteur d'acide est l'hydroxyde de calcium.

8. Tuyau selon la revendication 1, **caractérisé en ce que** l'au moins un benzotriazolate d'organophosphonium comprend le benzotriazolate de tert-n-butyl phosphonium, ladite au moins une amidine comprend le 1,8-diazabicyclo[5.4.0]undécène-7, et le rapport pondéral de l'au moins un benzotriazolate d'organophosphonium à l'au moins une amidine est dans la plage de 1,1 à 7, de manière préférée de 1,5 à 3.

9. Tuyau selon au moins l'une des revendications précédentes, **caractérisé en ce que** ledit polymère quaternaire thermoplastique est dérivé (i) de tétrafluoroéthylène, (ii) de fluorure de vinylidène (iii) d'au moins un monomère à insaturation éthylénique de formule CF₂ = CFR_{f} dans laquelle R_{f} est un perfluoroalkyle ou un perfluoroalcoxy de 1 à 8 atomes de carbone, (iv) d'un éther de perfluorovinyle de formule CF₂ = CF-(OCF₂CF (R_{f})) ₐ OR'_{f'} dans laquelle R_{f} est tel que décrit en (iii), R'_{f} est un perfluoroaliphatique, un perfluoroalkyle ou un perfluoroalcoxy, de 1 à 8 atomes de carbone, et a la valeur de 0 à 3, ou (v) de tétrafluoroéthylène, d'héxafluropropylène, de fluorure de vinylidène et d'un éther de perfluorovinyle de formule PPVE1 ou PPVE2 :
CF₂ = CFOCF₂CF₂CF₃ PPVE1

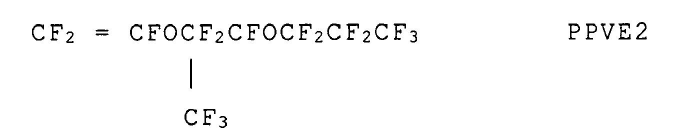

10. Tuyau selon au moins l'une des revendications précédentes, comprenant une couche la plus interne (10) comprenant 100 parties en poids d'un caoutchouc acrylonitrile-butadiène (NBR), ledit caoutchouc acrylonitrile comprenant au moins 41 pourcent en poids d'acrylonitrile lié ;
de 3 à 20 parties en poids, pour 100 parties en poids du NBR, d'au moins un accepteur d'acide ;
de 1 à 10 parties en poids, pour 100 parties en poids du NBR, d'au moins un benzotriazolate d'organophosphonium ; et
de 0,25 à 10 parties en poids, pour 100 parties en poids du NBR, d'au moins une amidine ;
une couche de protection (12) à la surface et en vis-à-vis direct avec la couche la plus interne, la couche de protection (12) comprenant un polymère quaternaire thermoplastique dérivé de tétrafluoroéthylène, de héxafluropropylène, de fluorure de vinylidène et d'éther de perfluorovinyle ; et
une couche de friction (14) à la surface et en vis-à-vis direct avec la couche de protection (12), la couche de friction (14) comprenant 100 parties en poids d'un caoutchouc acrylonitrile-butadiène (NBR), ledit caoutchouc acrylonitrile comprenant de 30 à 40 pourcent en poids, de manière préférée de 45 pourcent en poids d'acrylonitrile lié ; de 3 à 20 parties en poids, pour 100 parties en poids du NBR, d'au moins un accepteur d'acide ;
de 1 à 10 parties en poids, pour 100 parties en poids du NBR, d'au moins un benzotriazolate d'organophosphonium ; et
de 0,25 à 10 parties en poids, pour 100 parties en poids du NBR, d'au moins une amidine.
